# EUROPÄISCHE PATENTSCHRIFT

(11) **EP 0 620 107 B1**
(45) Veröffentlichungstag und Bekanntmachung des Hinweises auf die Patenterteilung: **30.09.1998**
(21) Anmeldenummer: 94102133.9
(22) Anmeldetag: 11.02.1994
(51) Int. Cl.: B29C 65/14, B29C 65/78

(54) **Verfahren und Vorrichtung zur Herstellung eines Formteiles aus Kunststoff, sowie das durch das Verfahren hergestellte Formteil**
Process and apparatus for manufacturing a plastic article and article produced by this process
Procédé et appareil pour la fabrication d'un article en matière plastique et article fabriqué par ce procédé

(30) Priorität: 04.03.1993 CH 644/93
(43) Veröffentlichungstag der Anmeldung: 19.10.1994
(73) Patentinhaber: Georg Fischer Rohrleitungssysteme AG, CH-8201 Schaffhausen (CH)
(72) Erfinder: Tanner, Ernst, CH-8212 Neuhausen a.Rhf. (CH); Wermelinger, Jörg, CH-8200 Schaffhausen (CH)
(74) Vertreter: Rottmann, Maximilian R.

(56) Entgegenhaltungen:
- EP-A- 0 453 903
- WO-A-90/14941
- DE-A- 2 346 391
- DE-A- 3 121 081
- DE-U- 9 218 016
- GB-A- 1 514 954
- GB-A- 2 003 570
- GB-A- 2 054 449
- JP-A- 1 141 722
- JP-A- 1 229 616
- US-A- 3 231 444
- US-A- 3 723 229
- US-A- 3 770 013
- US-A- 3 921 662
- US-A- 4 872 935

## Beschreibung

Die Erfindung betrifft ein Verfahren zur Herstellung eines Formteils aus Kunstoff wie es im Oberbegriff von Anspruch 1 beschrieben ist, sowie ein durch das Verfahren hergestelltes Formteil und eine dafür erforderliche Vorrichtung.

Es ist bekannt Rohrstutzen für Abzweigleitungen mit Rohren an deren Aussenumfang zu verschweissen (z.B. CH-PS 570 577), wobei zwischen der Rohrleitung und einem Sattelteil des Rohrstutzen eine aus einem Widerstandsdraht bestehende Schweissmatte zur Erzeugung der Schweisstemperatur angeordnet ist. Derartige Schweissverfahren sind sehr aufwendig.

Aus der Schrift DE-A-2346391 geht ein Verfahren hervor, bei dem der Schweissvorgang durch Berührung der zu verschweissenden Rohrteile mit Heizelementen erfolgt. Die Heizelemente erwärmen die Rohrteile auf eine geeignete Temperatur und bevor die Rohrteile zusammengedrückt werden, werden die Heizelemente zurückgezogen. Bei dem in der Schrift GB-A-1514954 beschrieben Verfahren erfolgt die Erwärmung der Rohrteile in gleicher Weise durch Kontakt mit Heizelementen.

Aus der Schrift EP-A-0453903 geht ein Verfabren zum Verschweissen von Kunststoffteilen durch kontakloses Schweissen mittels Wärmestrahlung hervor. Allerdings eignet sich das dort beschriebene Verfahren nur dazu, rohrförmige Teile und Rohre in koaxialer Richtung stirnseitig miteinander zu verschweissen.

Die Notwendigkeit, eine Verbindung eines Rohres mit einem in Querrichtung verlaufenden Rohr herzustellen, etwa für Rohrverzweigungen, geht auch aus der Schrift US-A-3921662 (D1) hervor. Das dort beschriebene Sicherheitsventil ist in einem Verlängerungselement einer senkrecht zu axialen Richtung des Hauptrohres angebrachten Rohrverbindung untergebracht.

Aufgabe der vorliegenden Erfindung ist die Schaffung eines Verfahrens der eingangs genannten Art und einer dafür erforderlichen Vorrichtung, mittels welchen eine feste Schweissverbindung ohne zusätzlich erforderlich und an der Verbindung verbleibende Mittel herstellbar ist.

Erfindungsgemäss wird diese Aufgabe durch die kennzeichnenden Merkmale des Verfahrensanspruches 1, des Anspruches 3 betreffend ein durch das Verfahren hergestellten Formteiles und des Vorrichtungsanspruches 6 gelöst.

Besonders vorteilhafte Ausführungen sind in den davon abhängigen Ansprüchen gekennzeichnet.

Die Erfindung ist in den beiliegenden Zeichnungen beispielsweise dargestellt und nachfolgend beschrieben. Es zeigen:

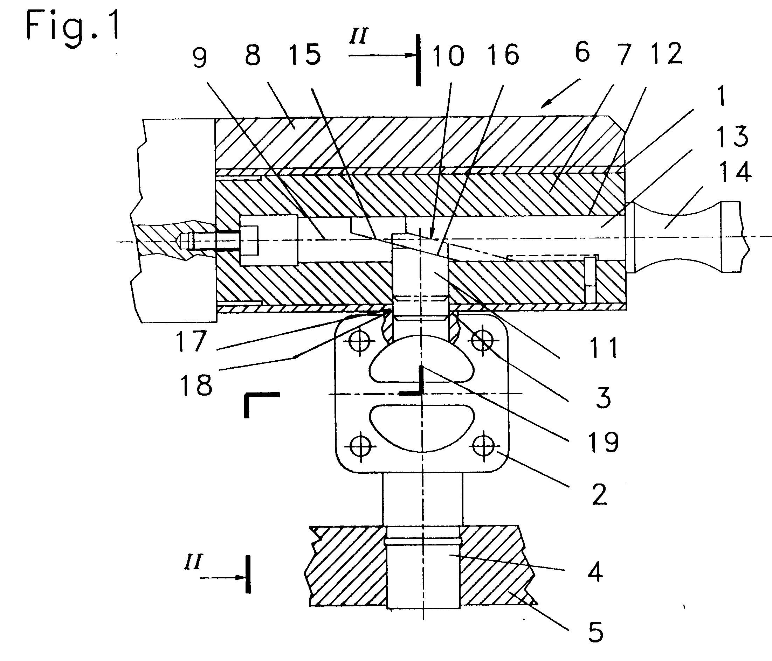

- Fig. 1: einen Querschnitt durch eine Vorrichtung zum Verschweissen mit den zu verschweissenden Teilen in vereinfachter Darstellung

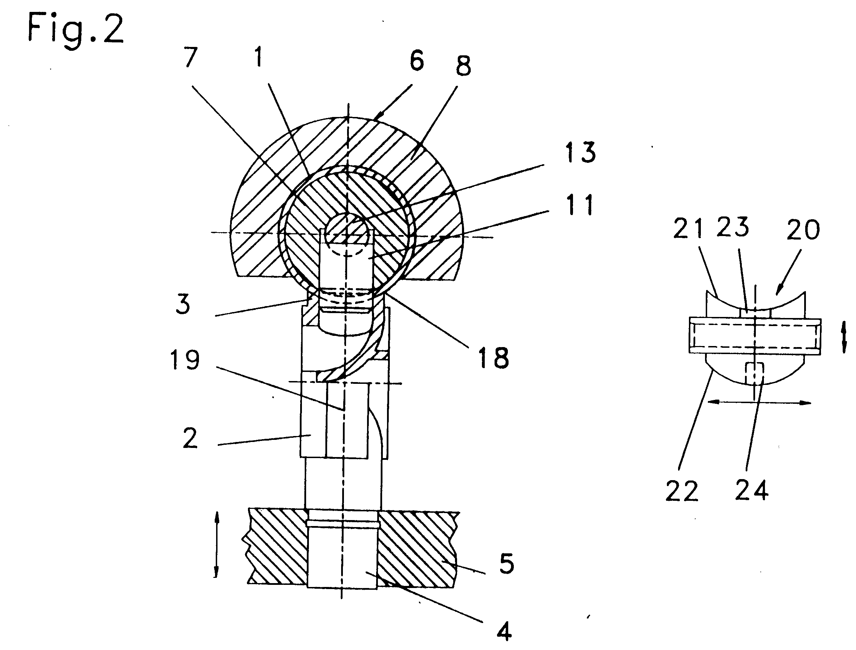

- Fig. 2: einen Schnitt entlang der Linie II - II von Fig. 1.

Die Figuren zeigen eine Vorrichtung zum Verschweissen eines rohrförmigen Teiles 1 z.B. eines Rohrstückes aus Kunststoff mit einem Rohrstutzen 3 eines Ventilgehäuses 2 z.B. eines Membranventiles. Das Ventilgehäuse 2 weist einen zweiten Rohrstutzen 4 auf. Das Ventilgehäuse 2 wird mit dem Rohrstutzen 4 in einer Aufnahmevorrichtung 5 fest gehalten, wobei die Aufnahmevorrichtung 5 auf einem weiter nicht dargestellten verschiebbaren Schlitten angeordnet ist. Es können auch andere einen Rohrstutzen 3 aufweisende Formteile mit dem rohrförmigen Teil 1 zu einem Formteil miteinander verschweisst werden.

Das rohrförmige Teil 1 ist in einer zweiten Aufnahmevorrichtung 6 formschlüssig gehalten. Diese weist ein den Aussenumfang des rohrförmigen Teiles 1 teilweise umfassendes AussenAbstützteil 8 und ein der Innenkontur des rohrförmigen Teiles 1 entsprechendes Innen-Abstützteil 7 auf. Am Innen-Abstützteil 7 ist ein quer zu dessen Längsachse 9 mittels eines Keilzuges 10 verschiebbarer Bolzen 11 angeordnet. Der Keilzug 10 besteht aus einer in einer Bohrung 12 des Innen-Abstützteiles 7 mittels eines Handgriffes 14 verschiebbaren Stange 13 welche eine schräge Fläche 15 aufweist, an welche der Bolzen 11 mit einer stirnseitigen schrägen Fläche 16 anliegt.

Beim Einschieben des Stange 13 wird der Bolzen 11 durch eine im rohrförmigen Teil 1 angeordnete Bohrung 17 so weit verschoben, dass er bis in den Rohrstutzen 3 des Ventilgehäuses 2 ragt. Der Aussendurchmesser des Bolzens 12 entspricht dem Innendurchmesser des Rohrstutzens 3.

Zur Entnahme der geschweissten Teile muss vorher der Bolzen 11 durch den Rohrstutzen 3 zurückgestossen werden. Es besteht auch die Möglichkeit den Keilzug 10 durch eine entsprechende formschlüssige Verbindung zwischen der Stange 13 und dem Bolzen 11 in beide Richtungen wirkend auszubilden.

An Stelle des Handgriffes 14 kann auch für einen automatischen Arbeitsablauf ein Hubkolbenantrieb angeordnet werden.

Die Vorrichtung weist ferner eine Heizvorrichtung 20 auf, welche durch eine Infrarot-Strahlung ein berührungsloses Aufheizen des stirnseitigen Endes 18 des Rohrstutzens 3 und einen Teil des Aussenumfanges vom rohrförmigen Teil 1 ermöglicht. Die Heizvorrichtung ist zwischen die Teile 1 und 3 einschiebbar oder einschwenkbar und wird dann durch axiales Verschieben mittels der Aufnahmevorrichtung 5 auf für ein rasches Aufheizen entsprechende Distanz von ca. 1 bis 2 mm zu den erwärmenden Flächen gebracht.

Die Heizvorrichtung weist eine dem Aussenumfang des rohrförmigen Teiles 1 entsprechende konkave Abstrahlfläche 21 und eine dem stirnseitigen Ende 18 des Rohrstuztens 3 entsprechnde konvexe Abstrahlfläche 22 auf. Beide Abstrahlfächen sind mit zentrisch angeordneten runden Ausnehmungen 23, 24 versehen.

Die Heizvorrichtung 20 ist z.B. mit Heizpatronen elektrisch aufheizbar und ist vorzugsweise aus Kupfer hergestellt wobei die Abstrahlflächen 21, 22 mit Keramik beschichtet sind. Der Verfahrensablauf erfolgt wie nachfolgend beschrieben:

Das rohrförmige Teil 1 wird mit der Bohrung 17 versehen in die Aufnahmevorrichtung 6 eingeschoben und das Ventilgehäuse 2 mit dem Rohrstutzen 4 in die in der äusseren Endstellung stehende Aufnahmevorrichtung 5 eingespannt, wobei das stirnseitige Ende 18 des Rohrstutzens 3 bereits formmässig an den Aussendurchmesser des rohrförmigen Teiles 1 angepasst ist.

Nach dem Einschwenken der Wärmestrahlen erzeugenden Heizvorrichtung 20 wird das stirnseitige Ende 18 und ein ringförmiger Teil des Aussenumfanges des rohrförmigen Teiles 1 im Bereich der Bohrung 17 zur Plastifizierung des Kunststoffes erhitzt. Nach dem Zurückschwenken der Heizvorrichtung wird der Bolzen 11 mittels des Keilzuges 10 in Richtung seiner Längsachse 19 durch die Bohrung 17 geschoben und des Ventilgehäuse 2 durch Verschieben des Schlittens bei gleichzeitigen Aufschieben des Rohrstutzens 3 auf den Bolzen 11 gegen den Aussenumfang des rohrförmigen Teiles 1 gedrückt.

Durch die innere Abstützung der beiden Teile 1 und 3 ist eine Verformung dieser Teile beim Verschweissen ausgeschlossen und es können keine inneren Wülste bzw. Grate entstehen, welche nachteilig für einen einwandfreien Mediums-Durchfluss sind.

## Patentansprüche

1. Verfahren zum Herstellen eines Formteils aus thermoplasitischem Kunstoff durch Verschweissen eines Rohrstutzens (3) eines Ventilgehäuses (2) mit einem rohrförmigen Teil (1) wobei der Rohrstutzen (3) mit einem stirnseitigen Ende am Aussenumfang des rohrförmigen Teiles (1) angeschweisst wird, durch gekennzeichnet, dass ein kreisringförmiger Bereich um eine radiale Bohrung (17) des rohrförmigen Teils und das stirnseitige Ende (18) Rohrstutzens (3) berührungslos durch Wärmestrahlen erhitzt und anschliesend die beiden Teile zum Verschweißen gegeneinander gedrückt werden.

2. Verfahren nach Anspruch 1, dadurch gekennzeichnet, dass innerhalb des rohrförmigen Teiles und des Rohrstutzens vor dem gegenseitigen Aneinanderdrücken Abstützteile angeordnet werden.

3. Formteil aus Kunstoff bestehend aus einem Rohrteil und einem absperrbaren Abzweigungsrohrteil hergestellt nach dem Verfahren gemäss einem der Ansprüche 1 bis 2, dadurch gekennzeichnet, dass ein Ventilgehäuse (2) mit seinem Rohrstutzen (3) am Aussenumfang des rohrförmigen Teiles (1) mittels Schweissung fest verbunden ist.

4. Formteil nach Anspruch 3, dadurch gekennzeichnet, dass die Längsachse (19) des Ventilgehäuses (2) senkrecht zur Längsachse (9) des rohrförmigen Teiles (1) angeordnet ist.

5. Vorrichtung zur Durchführung des Verfahrens gemäss einem der Ansprüche 1 oder 2 mit einer auf einem verschiebbaren Schlitten angeordneten ersten Aufnahmevorrichtung, einer zweiten Aufnahmevorrichtung für das rohrförmige Teil und einer dazwischen einschwenkbaren Heizvorrichtung (2) zum berührungslosen Aufheizen der Schweisspartien, dadurch gekennzeichnet, dass die Aufnahmevorrichtung (6) für das rohrförmigen Teiles (1) ein der Innenkontur des rohrförmigen Teiles (1) entsprechendes Innen-Abstützteil (7) aufweist, an welchem ein quer zu dessen Längsachse (9) verschiebbarer Bolzen (11) angeordnet ist.

6. Vorrichtung nach Anspruch 5, dadurch gekennzeichnet, dass der Bolzen (11) mittels eines Keilzuges (10) verschiebbar ist.

7. Vorrichtung nach einem der Ansprüche 5 oder 6, dadurch gekennzeichnet, dass der Aussendurchmesser des Bolzens (11) dem Innendurchmesser des Rohrstutzens (3) entspricht.

8. Vorrichtung nach einem der Ansprüche 5 bis 7, dadurch gekennzeichnet, dass die Heizvorrichtung (20) auf einer Seite eine konkave Abstrahlfläche (21) und auf der anderen Seite eine konvexe Abstrahlfläche (22) aufweist.

## Claims

1. Process for manufacturing an article from thermoplastic material by welding a pipe connecting piece (3) of a valve housing (2) to a tubular part (1), the pipe connecting piece (3) being welded by an end face onto the outer circumference of the tubular part (1), characterized in that an annular region around a radial bore (17) of the tubular part and the end face (18) of the pipe connecting piece (3) are contactlessly heated by thermal rays and the two parts are subsequently pressed against each other for welding.

2. Process according to Claim 1, characterized in that, before being pressed against each other, supporting parts are arranged inside the tubular part and inside the pipe connecting piece.

3. Plastic article comprising a pipe part and a branching pipe part which can be shut off, manufactured by the process according to one of Claims 1 or 2, characterized in that a valve housing (2) is firmly connected by its pipe connecting piece (3) to the outer circumference of the tubular part (1) by means of welding.

4. Article according to Claim 3, characterized in that the longitudinal axis (19) of the valve housing (2) is arranged perpendicularly with respect to the longitudinal axis (9) of the tubular part (1).

5. Apparatus for carrying out the process according to one of Claims 1 or 2, having a first receiving device, arranged on a displaceable carriage, a second receiving device for the tubular part and a heating device (20), which can be swivelled in between, for contactlessly heating up the parts to be welded, characterized in that the receiving device (6) for the tubular part (1) has an inner supporting part (7) which corresponds to the inner contour of the tubular part (1) and on which there is arranged a bolt (11) which is displaceable transversely with respect to the longitudinal axis (9) of the said inner supporting part.

6. Apparatus according to Claim 5, characterized in that the bolt (11) is displaceable by means of a wedge-drawing device (10).

7. Apparatus according to one of Claims 5 or 6, characterized in that the outside diameter of the bolt (11) corresponds to the inside diameter of the pipe connecting piece (3).

8. Apparatus according to one of Claims 5 to 7, characterized in that the heating device (20) has a concave radiating surface (21) on one aide and a convex radiating surface (22) on the other side.

## Revendications

1. Procédé de réalisation d'une pièce de forme en matière thermoplastique par soudage d'un embout tubulaire (3) d'un boîtier de valve (2) avec une pièce tubulaire (1), l'embout tubulaire (3) étant soudé par une extrémité frontale sur la surface périphérique extérieure de la pièce tubulaire (1), caractérisé en ce qu'on chauffe, sans contact et par rayonnement thermique, une zone en forme d'anneau circulaire située autour d'un perçage radial (17) de la pièce tubulaire et l'extrémité frontale (18) de l'embout tubulaire (3) et on applique ensuite les deux pièces en appui l'une sur l'autre pour le soudage.

2. Procédé suivant la revendication 1, caractérisé en ce qu'avant l'application mutuelle, on dispose des pièces de soutien à l'intérieur de la pièce tubulaire et de l'embout tubulaire.

3. Pièce de forme en matière plastique constituée d'une pièce tubulaire et d'une pièce tubulaire de branchement pouvant être obturée, réalisée par le procédé suivant l'une des revendications 1 et 2, caractérisée en ce qu'un boîtier de valve (2) est fixé à demeure par soudage, par son embout tubulaire (3), sur la surface périphérique extérieure de la pièce tubulaire (1).

4. Pièce de forme suivant la revendication 3, caractérisée en ce que l'axe longitudinal (19) du boîtier de valve (2) est disposé perpendiculairement à l'axe longitudinal (9) de la pièce tubulaire (1).

5. Dispositif de mise en oeuvre du procédé suivant l'une des revendications 1 ou 2, comportant un premier dispositif de positionnement disposé sur un chariot pouvant coulisser, un second dispositif de positionnement pour la pièce tubulaire et un dispositif de chauffage (2) pouvant basculer jusqu'entre ceux-ci et qui sert au chauffage sans contact des parties à souder, caractérisé en ce que le dispositif de positionnement (6) pour la pièce tubulaire (1) comprend une pièce de soutien intérieur (7), correspondant au contour intérieur de la pièce tubulaire (1), sur laquelle est disposé une pièce cylindrique (11) pouvant coulisser transversalement à l'axe longitudinal (9) de la pièce de soutien intérieur.

6. Dispositif suivant la revendication 5, caractérisé en ce que la pièce cylindrique (11) peut être déplacée d'une manière coulissante au moyen d'un coin (10).

7. Dispositif suivant l'une des revendications 5 ou 6, caractérisé en ce que le diamètre extérieur de la pièce cylindrique (11) correspond au diamètre intérieur de l'embout tubulaire (3).

8. Dispositif suivant l'une des revendications 5 à 7, caractérisé en ce que le dispositif de chauffage (20) comporte d'un côté une surface concave de rayonnement (21) et de l'autre côté une surface convexe de rayonnement (22).
